# FASCICULE DE BREVET EUROPEEN

(11) **EP 2 030 870 B1**
(45) Date de publication et mention de la délivrance du brevet: **22.09.2010**
(21) Numéro de dépôt: 08305430.4
(22) Date de dépôt: 29.07.2008
(51) Int. Cl.: B62D 21/06, B62D 25/20, F16B 5/06

(54) **Structure de véhicule automobile**
Kraftfahrzeugaufbau
Motor vehicle bodywork

(30) Priorité: 29.08.2007 FR 0757246
(43) Date de publication de la demande: 04.03.2009
(73) Titulaire: Peugeot Citroën Automobiles SA, 78943 Vélizy-Villacoublay Cedex (FR)
(72) Inventeur: Nicolier, Stèphane, 25340, CLERVAL (FR)

(56) Documents cités:
- WO-A-2005/035335
- DE-U1- 20 219 739
- FR-A- 2 484 034
- FR-A- 2 798 354
- GB-A- 1 284 443
- JP-A- 9 328 083
- US-A- 5 243 920
- US-A- 5 461 986

## Description

La présente invention concerne une structure de véhicule comportant un soubassement muni d'une barre de rigidification dont les extrémités sont fixées au soubassement. La structure comprend en outre un dispositif de maintien disposé entre les extrémités de la barre de rigidification.

On connaît dans l'état de la technique des structures de véhicule automobile, notamment des structures de véhicules décapotables, munies de barres de rigidification.

Comme cela est divulgué par le document FR 2 798 354, habituellement, les barres de rigidification sont fixées sur la surface inférieure de la structure du véhicule, au niveau de son plancher, au moyen de vis. Ce type de barre permet de rigidifier la structure du véhicule, de façon à améliorer le comportement acoustique et vibratoire du véhicule

Toutefois, la fixation au moyen de vis est une opération compliquée, étant donné que la barre doit être maintenue par le monteur dans sa position finale, pendant ce temps, ce dernier doit également fixer les barres sur la structure à l'aide des vis de fixation.

L'invention a donc pour but de faciliter le montage des barres de rigidification sur la structure d'un véhicule.

A cet effet, l'invention a pour objet une structure du type précitée caractérisé en ce que que le dispositif de maintien comprend un corps de maintien adapté pour recevoir la barre de rigidification, et des moyens de fixation du corps de maintien à la structure de véhicule, le corps de maintien étant adapté pour fixer la barre de rigidification à la structure et permettre un déplacement de la barre de rigidification par rapport au corps de maintien selon une direction longitudinale de la barre de rigidification.

Selon les modes particuliers de réalisation, l'invention comporte l'une ou plusieurs des caractéristiques suivantes :
- le corps de maintien a une forme sensiblement en U, comportant une première branche latérale et une deuxième branche latérale reliées par une âme centrale, la barre de rigidification étant destinée à être disposée entre les branches latérales ;.
- le corps de maintien comporte des organes de guidage favorisant l'entrée de la barre de rigidification dans le corps de maintien ;
- le corps de maintien comporte des pattes de maintien s'appliquant élastiquement sur la barre de rigidification et coopérant exclusivement par frottement avec celle-ci ;
- les moyens de fixation comportent
   - une tête de fixation ayant une section non-circulaire,
   - un pied de fixation reliant la tête de fixation au corps de maintien ; et
   - le dispositif de maintien comporte une collerette de rattrapage de jeu disposée entre le corps de maintien et le pied de fixation.

L'invention a également pour objet :
- une structure de véhicule comportant un soubassement muni d'une barre de rigidification dont les extrémités sont fixées audit soubassement, caractérisé en ce qu'elle comprend un dispositif de maintien tel que défini ci-dessus , le corps de maintien étant adapté pour fixer la barre de rigidification à la structure et permettre un déplacement de la barre de rigidification par rapport au corps de maintien selon une direction longitudinale de la barre de rigidification ;
- la barre de rigidification comporte une partie courante et deux extrémités , et le dispositif de maintien est disposé sur la partie courante ;
- la structure comporte un orifice de fixation non circulaire, et les moyens de fixation comportent une tête de fixation adaptée pour s'engager dans l'orifice de fixation, la tête de fixation et l'orifice de fixation définissant une configuration de libération dans laquelle la tête de fixation est insérable et retirable de l'orifice de fixation et une configuration de fixation dans laquelle la tête de fixation et l'orifice de fixation sont fixés l'un à l'autre ; et
- le dispositif de maintien comporte une butée qui est adaptée pour s'opposer à une rotation du corps de maintien par rapport à la structure de véhicule au-delà de sa configuration de fixation.

L'invention a également pour objet un véhicule automobile, caractérisé en qu'il comprend une structure tel que définie ci-dessus.

L'invention sera mieux comprise à la lecture de la description qui va suivre, donnée uniquement à titre d'exemple et en se référant aux dessins annexés, sur lesquels :
- la figure 1 est une vue en perspective de dessous d'un soubassement de véhicule équipé de barres de rigidification ;
- la figure 2 est une vue en perspective d'un dispositif de maintien d'une barre de rigidification, selon l'invention ;
- la figure 3 est une vue en perspective de dessous d'une partie du soubassement, équipée de barres de rigidification, sur lequel est monté le dispositif de maintien selon l'invention et
- la figure 4 montre une vue en perspective de dessus d'une partie du soubassement sur lequel est monté le dispositif de maintien selon l'invention, la barre de rigidification étant omise.

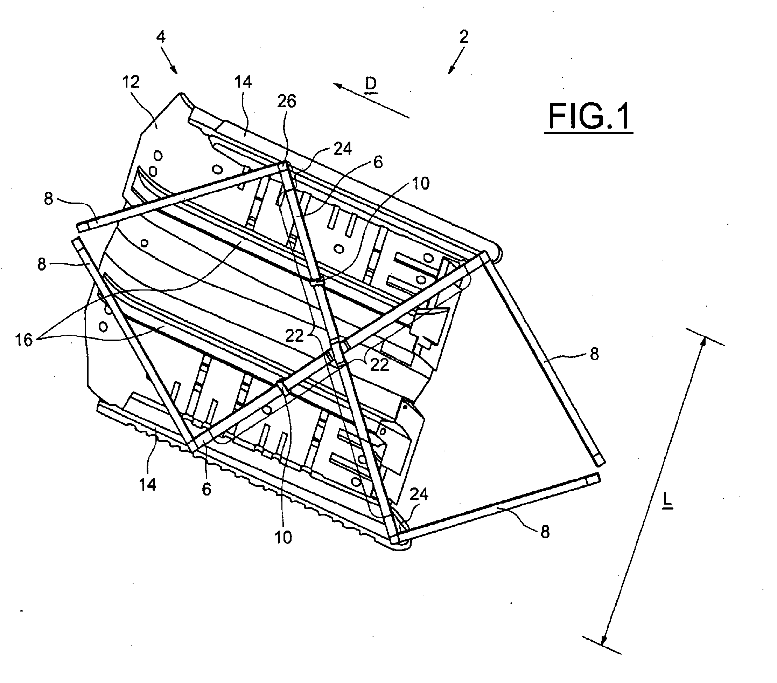

La figure 1 montre un soubassement de véhicule automobile, désignée par la référence générale 2.

Le soubassement 2 appartient à une structure d'un véhicule 4, il est équipé de deux barres de rigidification principales 6 et quatre barres de rigidification auxiliaires 8. Le soubassement 2 comporte en outre, selon l'invention, un dispositif de maintien 10 pour chacune des barres 6.

La structure de véhicule est par exemple une structure d'un véhicule automobile décapotable.

Le soubassement 2 comporte, de façon classique, un plancher 12, deux longerons latéraux 14 fixés sur deux bords parallèles du plancher 12, et deux brancards intérieurs 16 s'étendant parallèlement aux longerons 14.

Les longerons latéraux 14 et les brancards intérieurs 16 sont, par exemple, constitués par des pièces en tôle embouties fixées sur le plancher 12.

Le soubassement du véhicule 2 définit une direction de véhicule D s'étendant de l'avant du véhicule vers l'arrière. Les longerons latéraux 14 et les brancards intérieurs 16 s'étendent parallèlement à cette direction de véhicule. Le plancher 12 a une largeur L.

Les brancards intérieurs 16 sont espacés l'un de l'autre de 1/3 de la largeur L du plancher 12.

Chaque barre de rigidification 6 principale s'étend en oblique par rapport à la direction D du véhicule, et s'étend d'un longeron latéral 14 jusqu'à l'autre longeron latéral 14. La barre de rigidification 6 est inclinée par exemple de 30° à 60° par rapport à la direction de véhicule D.

Chaque barre de rigidification 6 peut être composée de barre ou de tube métallique.

Elle peut également être constituée de premiers éléments oblongs en métal et de deuxième élément oblong en matière viscoélastique s'étendant en sandwich entre les premiers éléments oblongs, chacun des éléments s'étendant sur toute la longueur de la barre. Ainsi, ce type de barres de rigidification 6 est adaptée à la fois pour rigidifier le plancher 12 et pour amortir des vibrations lors du roulage du véhicule.

Chaque barre de rigidification 6 comporte une partie courante 22 ainsi que deux extrémités 24. Chaque extrémité 24 s'étend par exemple sur 5% de la longueur totale de la barre de rigidification 6. La partie courante 22 est constituée par la partie résiduelle de la barre de rigidification 6. Chaque barre de rigidification 6 définit une direction longitudinale de la barre qui s'étend selon un axe de la barre.

Chaque barre de rigidification 6 est fixée au niveau de chaque extrémité 24 à l'un des longerons 14, par exemple par des vis 26 ou par un autre moyen de fixation approprié.

Les moyens de fixation 26 fixent la barre de rigidification dans toutes les directions spatiales aussi bien en translation qu'en rotation.

Chaque barre de rigidification 6 est, en outre, maintenue par un dispositif de maintien 10 contre l'un des brancards intérieurs 16.

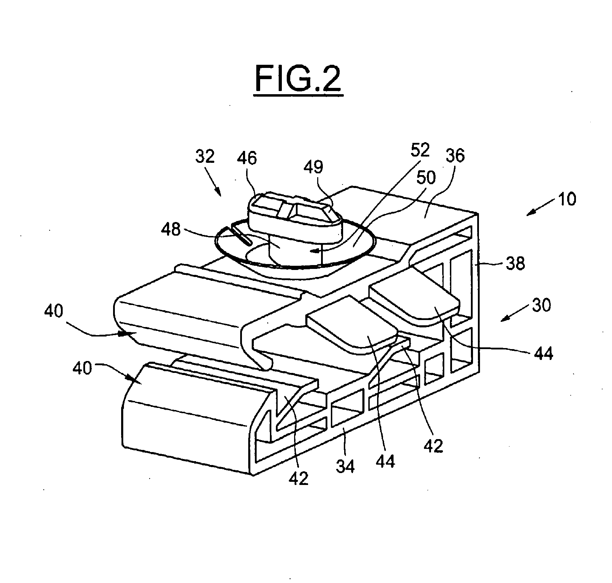

Sur la figure 2, est représenté plus en détail un tel dispositif de maintien 10.

Chaque dispositif de maintien 10 comporte un corps de maintien 30 adapté pour recevoir la barre de rigidification 6 ainsi que des moyens de fixation 32 du corps de maintien 30 au soubassement du véhicule 2

Le corps de maintien 30 a une forme sensiblement en U comportant une première branche latérale 34 et une deuxième branche latérale 36 qui sont reliées par une âme centrale 38.

Le côté du corps de maintien 30 opposé à l'âme centrale 38 est ouvert.

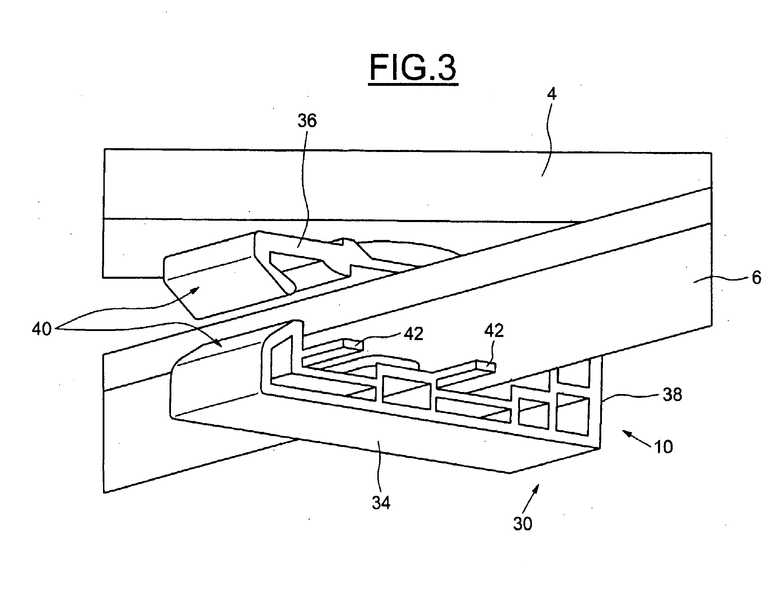

Comme ceci est représenté à la figure 3, la partie courante 22 de la barre de rigidification 6 est reçue par l'espace délimitée par les deux branches latérales 34, 36 et par l'âme centrale 38.

Le corps de maintien 30 est adapté pour permettre un déplacement en translation de la barre de rigidification 6 selon la direction longitudinale de cette barre, et pour fixer la barre de rigidification 6 selon les autres directions s'étendant perpendiculairement à cette direction longitudinale de la barre.

Ainsi, le dispositif de maintien 10 permet un pré-maintien temporaire et un pré-positionnement de la barre de rigidification 6 par rapport au soubassement 2 lors du montage et en l'absence des vis 26.

En outre, le corps de maintien 30 comporte des organes de guidage 40 favorisant l'entrée de la barre de rigidification 6 dans le corps de maintien 30. Dans le cas présent, les organes de guidage 40 sont formés par des surfaces d'entrée formant une trémie d'entrée. Les surfaces de guidage 40 sont disposées à chaque fois sur une extrémité de l'une des branches latérales 34, 36 opposée à l'âme centrale 38.

Le corps de maintien 30 comporte des premières pattes de maintien 42 disposées sur la première branche latérale 34 ainsi que des deuxièmes pattes de maintien 44 faisant saillie de la deuxième branche latérale 36.

Les premières pattes de maintien 42 sont disposées en vis-à-vis de la deuxième branche latérale 36. Les deuxièmes pattes de maintien 44 s'étendent en dehors de la première branche latérale 34.

Les pattes de maintien 42, 44 s'appliquent élastiquement contre la surface de la barre de rigidification 6, en co-opérant exclusivement par frottement avec celle-ci afin de s'opposer à un glissement intempestif de la barre de rigidification 6 par rapport au corps de maintien 30. Ainsi, la barre de rigidification 6 ne se déplace pas sous l'effet de son poids propre, mais sa position par rapport au dispositif de maintien 30 peut être ajustée par le monteur.

En se référant de nouveau à la Figure 2, les moyens de fixation 32 comportent une tête de fixation 46 et un pied de fixation 48, reliant la tête de fixation 46 au corps de maintien 30.

La tête de fixation 46 a une section transversale non circulaire, dans le cas présent une section oblongue.

En outre, la tête de fixation 46 est munie d'une extrémité d'entrée chanfreiné 49.

Le pied de fixation 48 a également une section non circulaire et définit une surface de butée 52.

Les moyens de fixation 32 comportent, en outre, une collerette de rattrapage de jeu 50, entre le corps de maintien 30 et le pied de fixation 48, ayant une forme tronconique.

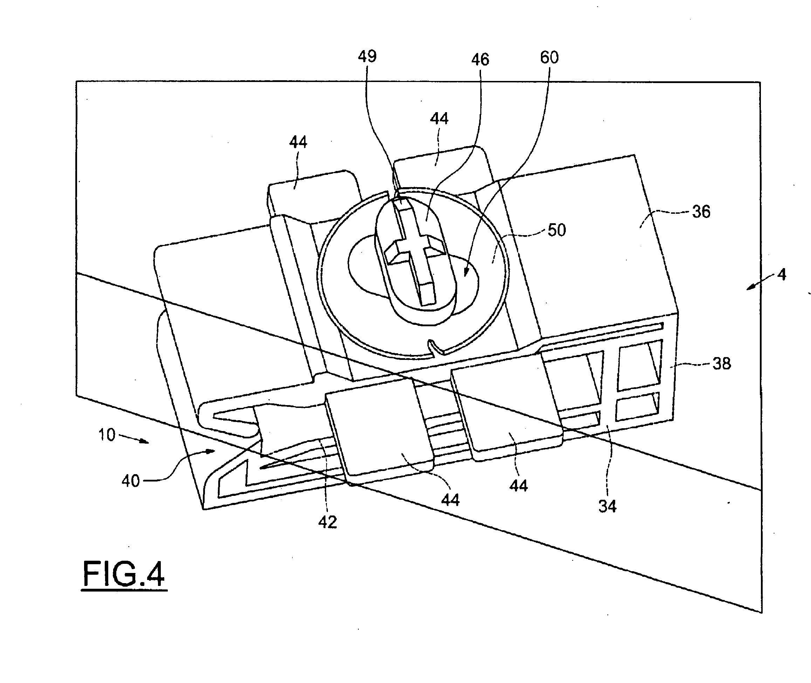

Comme ceci est visible à la figure 4, le soubassement 2 comporte un orifice de fixation 60. L'orifice de fixation 60 a une forme complémentaire de la section de la tête de fixation 46 et la tête de fixation 46 est adaptée pour s'engager dans cet orifice de fixation 60. Ainsi, l'orifice de fixation 60 et la tête de fixation 46 définissent une configuration de libération dans laquelle la tête de fixation 46 est insérable et retirable de l'orifice de fixation 60 et une configuration de fixation dans laquelle la tête de fixation 46 et l'orifice de fixation 60 sont fixés l'un à l'autre.

La configuration de libération est définie par une position du dispositif de maintien 30 dans laquelle la tête de fixation 46 coïncide avec la projection de l'orifice de fixation 60.

Dans la configuration de fixation, la butée 52 s'applique contre l'orifice de fixation 60 et s'oppose ainsi à une rotation du dispositif de maintien 30 au-delà de la configuration de fixation.

Les différents éléments du dispositif de maintien 30 sont fabriqués de préférence en matière plastique, et notamment d'un seul tenant, ce qui conduit à un coût économique.

Le soubassement 2, selon l'invention est assemblé de la manière suivante :
- Tout d'abord, le dispositif de maintien 10 est inséré dans sa configuration de libération dans l'orifice de fixation 60 et est ensuite amené dans sa configuration de fixation par une rotation du dispositif de maintien par rapport au soubassement 2.
- Ensuite, la barre de rigidification 6 est insérée entre les branches latérales 34 et 36, tout en étant guidée par les moyens de guidage 40, jusqu'à ce que la barre de rigidification 6 bute contre l'âme centrale 38,
- Puis, en cas de besoin, la barre de rigidification 6 est déplacée par rapport au dispositif de maintien 30 selon la direction longitudinale de la barre jusqu'à ce que les extrémités 24 de la barre de rigidification 6 coïncident avec les emplacements de fixation des vis 26. Simultanément, la barre de rigidification est maintenue selon au moins deux directions en translation par les branches 34, 36 et l'âme 38.
- Ensuite, la barre de rigidification 6 est fixée par vissage sur le soubassement 2.

Le dispositif de maintien 10 selon l'invention permet un maintien provisoire de la barre de rigidification 6 par rapport à la structure de véhicule en l'absence des moyens de fixation. Ainsi, le processus de montage est facilité. Le dispositif de maintien 10 est facile et économique à fabriquer.

Il est à noter que le dispositif de maintien 10 selon l'invention reste monté sur le véhicule au cours de la vie de ce dernier, il permet alors de limiter l'amplitude du débattement de la barre de rigidification 6 lors des sollicitations subies au cours du roulage du véhicule.

Bien évidemment, le dispositif de maintien 10 peut être adapté, selon d'autres modes de réalisation, pour soutenir les barres de rigidification principales 6 et/ou les barres de rigidification auxiliaires 8.

En variante, plusieurs dispositifs de maintien peuvent être utilisés pour une seule barre de rigidification.

En variante, le ou les dispositifs de maintien peuvent être disposé(s) à tout endroit approprié du soubassement.

## Revendications

1. Structure de véhicule (4) comportant un soubassement muni d'une barre de rigidification (6) dont les extrémités (24) sont fixées audit soubassement, et comprenant un dispositif de maintien (10) disposé entre les extrémités de la barre de rigidification (6), **caractérisée en ce que** le dispositif de maintien comprend un corps de maintien (30) adapté pour recevoir la barre de rigidification (6), et des moyens de fixation (32) du corps de maintien (30) à la structure de véhicule (4), le corps de maintien (30) étant adapté pour fixer la barre de rigidification (6) à la structure et permettre un déplacement de la barre de rigidification (6) par rapport au corps de maintien (30) selon une direction longitudinale de la barre de rigidification.

2. Structure de véhicule automobile selon la revendication 1, **caractérisée en ce que** le corps de maintien (30) a une forme sensiblement en U, comportant une première branche latérale (34) et une deuxième branche latérale (36) reliées par une âme centrale (38), la barre de rigidification. (6) étant destinée à être disposée entre les branches latérales (34, 36).

3. Structure de véhicule automobile selon la revendication 1 ou 2, **caractérisée en ce que** le corps de maintien (30) comporte des organes de guidage (40) favorisant l'entrée de la barre de rigidification dans le corps de maintien.

4. Structure de véhicule automobile selon l'une quelconque des revendications précédentes, **caractérisée en ce que** le corps de maintien (30) comporte des pattes de maintien (42, 44) s'appliquant élastiquement sur la barre de rigidification (6) et coopérant exclusivement par frottement avec celle-ci.

5. Structure de véhicule automobile selon l'une quelconque des revendications précédentes, **caractérisée en ce que** les moyens de fixation (32) comportent
- une tête de fixation (46) ayant une section non-circulaire,
- un pied de fixation (48) reliant la tête de fixation (46) au corps de maintien (30).

6. Structure de véhicule automobile selon la revendication 5, **caractérisée en ce qu'**il comporte une collerette de rattrapage de jeu (50) disposée entre le corps de maintien (30) et le pied de fixation (48).

7. Structure selon l'une quelconque des revendications précédentes, **caractérisée en ce que** la barre de rigidification (6) comporte une partie courante (22) et deux extrémités (24), et **en ce que** le dispositif de maintien (10) est disposé sur la partie courante (22).

8. Structure selon la revendication 5, **caractérisée en ce qu'**elle comporte un orifice de fixation (60) non circulaire, et **en ce que** les moyens de fixation (32) comportent une tête de fixation (46) adaptée pour s'engager dans l'orifice de fixation (60), la tête de fixation et l'orifice de fixation définissant une configuration de libération dans laquelle la tête de fixation est insérable et retirable de l'orifice de fixation et une configuration de fixation dans laquelle la tête de fixation et l'orifice de fixation sont fixés l'un à l'autre.

9. Structure selon la revendication 8, **caractérisée en ce que** le dispositif de maintien (30) comporte une butée (52) qui est adaptée pour s'opposer à une rotation du corps de maintien (30) par rapport à la structure de véhicule (4) au-delà de sa configuration de fixation.

10. Véhicule automobile, **caractérisé en qu'**il comprend une structure selon l'une quelconque des revendications précédentes.

## Claims

1. Vehicle structure (4) comprising an underframe fitted with a stiffening bar (6) whose ends (24) are fixed to said underframe, and comprising a retention device (10) between the ends of the stiffening bar (6), which structure is **characterized in that** the retention device comprises a retention body (30) designed to take the stiffening bar (6), and means (32) for fixing the retention body (30) to the vehicle structure (4), the retention body (30) being designed to fix the stiffening bar (6) to the structure and allow the stiffening bar (6) to move relative to the retention body (30) in a longitudinal direction of the stiffening bar.

2. Motor vehicle structure according to Claim 1, **characterized in that** the retention body (30) is generally U-shaped, comprising a first side arm (34) and a second side arm (36), these arms being connected by a central web (38), and the stiffening bar (6) being designed to be fitted between the side arms (34, 36).

3. Motor vehicle structure according to Claim 1 or 2, **characterized in that** the retention body (30) has guide members (40) to facilitate the insertion of the stiffening bar into the retention body.

4. Motor vehicle structure according to any one of the preceding claims, **characterized in that** the retention body (30) comprises retention tabs (42, 44) which press elastically against the stiffening bar (6) and interact with it by friction only.

5. Motor vehicle structure according to any one of the preceding claims, **characterized in that** the fixing means (32) comprise
• a fixing head (46) of non-circular section,
• a fixing foot (48) connecting the fixing head (46) to the retention body (30).

6. Motor vehicle structure according to Claim 5, **characterized in that** it comprises a gap take-up collar (50) between the retention body (30) and the fixing foot (48).

7. Structure according to any one of the preceding claims, **characterized in that** the stiffening bar (6) comprises a running part (22) and two ends (24), and **in that** the retention device (10) is located on the running part (22).

8. Structure according to Claim 5, **characterized in that** it comprises a non-circular fixing orifice (60), and **in that** the fixing means (32) comprise a fixing head (46) designed to engage in the fixing orifice (60), the fixing head and the fixing orifice defining a release configuration in which the fixing head can be inserted into and removed from the fixing orifice, and a fixing configuration in which the fixing head and the fixing orifice are fixed to each other.

9. Structure according to Claim 8, **characterized in that** the retention device (30) comprises a stop (52) which is designed to resist rotation of the retention body (30) relative to the vehicle structure (4) beyond its fixing configuration.

10. Motor vehicle **characterized in that** it comprises a structure according to any one of the preceding claims.

## Patentansprüche

1. Fahrzeugaufbau (4), der einen Unterboden aufweist, welcher mit einer Versteifungsstange (6) versehen ist, deren Enden (24) am Unterboden befestigt sind, und der eine Haltevorrichtung (10) enthält, die zwischen den Enden der Versteifungsstange (6) angeordnet ist, **dadurch gekennzeichnet, dass** die Haltevorrichtung einen Haltekörper (30), der geeignet ist, um die Versteifungsstange (6) aufzunehmen, und Befestigungseinrichtungen (32) des Haltekörpers (30) am Fahrzeugaufbau (4) enthält, wobei der Haltekörper (30) geeignet ist, um die Versteifungsstange (6) am Aufbau zu befestigen und eine Verschiebung der Versteifungsstange (6) bezüglich des Haltekörpers (30) in einer Längsrichtung der Versteifungsstange zu erlauben.

2. Kraftfahrzeugaufbau nach Anspruch 1, **dadurch gekennzeichnet, dass** der Haltekörper (30) im Wesentlichen eine U-Form hat, die einen ersten seitlichen Schenkel (34) und einen zweiten seitlichen Schenkel (36) aufweist, die durch einen zentralen Steg (38) verbunden sind, wobei die Versteifungsstange (6) dazu bestimmt ist, zwischen den seitlichen Schenkeln (34, 36) angeordnet zu werden.

3. Kraftfahrzeugaufbau nach Anspruch 1 oder 2, **dadurch gekennzeichnet, dass** der Haltekörper (30) Führungselemente (40) aufweist, die den Eintritt der Versteifungsstange in den Haltekörper begünstigen.

4. Kraftfahrzeugaufbau nach einem der vorhergehenden Ansprüche, **dadurch gekennzeichnet, dass** der Haltekörper (30) Haltelaschen (42, 44) aufweist, die sich elastisch auf die Versteifungsstange (6) auflegen und nur durch Reibung mit dieser zusammenwirken.

5. Kraftfahrzeugaufbau nach einem der vorhergehenden Ansprüche, **dadurch gekennzeichnet, dass** die Befestigungseinrichtungen (32) aufweisen
- einen Befestigungskopf (46) mit einem nicht kreisförmigen Querschnitt,
- einen Befestigungsfuß (48), der den Befestigungskopf (46) mit dem Haltekörper (30) verbindet.

6. Kraftfahrzeugaufbau nach Anspruch 5, **dadurch gekennzeichnet, dass** er einen Nachstellkragen (50) aufweist, der zwischen dem Haltekörper (30) und dem Befestigungsfuß (48) angeordnet ist.

7. Aufbau nach einem der vorhergehenden Ansprüche, **dadurch gekennzeichnet, dass** die Versteifungsstange (6) einen laufenden Bereich (22) und zwei Enden (24) aufweist, und dass die Haltevorrichtung (10) auf dem laufenden Bereich (22) angeordnet ist.

8. Aufbau nach Anspruch 5, **dadurch gekennzeichnet, dass** er eine nicht kreisförmige Befestigungsöffnung (60) aufweist, und dass die Befestigungseinrichtungen (32) einen Befestigungskopf (46) aufweisen, der geeignet ist, um sich in die Befestigungsöffnung (60) einzufügen, wobei der Befestigungskopf und die Befestigungsöffnung eine Freigabekonfiguration, in der der Befestigungskopf in die Befestigungsöffnung einführbar und daraus herausziehbar ist, und eine Befestigungskonfiguration definieren, in der der Befestigungskopf und die Befestigungsöffnung aneinander befestigt sind.

9. Aufbau nach Anspruch 8, **dadurch gekennzeichnet, dass** die Haltevorrichtung (30) einen Anschlag (52) aufweist, der geeignet ist, um einer Drehung des Haltekörpers (30) bezüglich des Fahrzeugaufbaus (4) über seine Befestigungskonfiguration hinaus entgegenzuwirken.

10. Kraftfahrzeug, **dadurch gekennzeichnet, dass** es einen Aufbau nach einem der vorhergehenden Ansprüche enthält.
